# EUROPÄISCHE PATENTSCHRIFT

(11) **EP 2 433 897 B1**
(45) Veröffentlichungstag und Bekanntmachung des Hinweises auf die Patenterteilung: **05.03.2014**
(21) Anmeldenummer: 11178855.0
(22) Anmeldetag: 25.08.2011
(51) Int. Cl.: B66F 9/075, B62D 33/06, B60H 1/00, B60H 1/22

(54) **Mobile Arbeitsmaschine mit einer Fahrerkabine**
Mobile work machine with a driver cabin
Machine de travail mobile dotée d'une cabine conducteur

(30) Priorität: 23.09.2010 DE 102010046406
(43) Veröffentlichungstag der Anmeldung: 28.03.2012
(73) Patentinhaber: Linde Material Handling GmbH, 63743 Aschaffenburg (DE)
(72) Erfinder: Sauer, Wolfgang, 45527 Hattingen (DE); Kunkel, Herbert, 63743 Aschaffenburg (DE)
(74) Vertreter: Geirhos, Johann

(56) Entgegenhaltungen:
- WO-A1-00/66380
- DE-A1- 4 440 433
- DE-A1- 10 110 142
- US-A- 3 920 105
- US-A- 4 133 574
- US-A1- 2010 176 110

## Beschreibung

Die Erfindung betrifft eine mobile Arbeitsmaschine, insbesondere Flurförderzeug, mit einer Fahrerkabine und einer elektrischen Kabinenheizeinrichtung, wobei die Arbeitsmaschine ein batterie-elektrisches Antriebssystem aufweist.

Bei batterie-elektrisch betriebenen mobilen Arbeitsmaschinen, beispielsweise Flurförderzeugen, die je nach Einsatzfall und Kundenwunsch mit offenen Fahrerschutzdächern oder geschlossenen Fahrerkabinen ausgerüstet werden können, ist es bislang bekannt, bei einer Ausführungsform mit einer geschlossenen Fahrerkabine eine elektrische Kabinenheizeinrichtung als Zusatzeinrichtung einzubauen. Die elektrische Kabinenheizeinrichtung ist in der Regel von einer elektrischen Zusatzheizung gebildet, die als eigenständige Baugruppe in die Fahrerkabine eingebaut wird, und einen elektrischen Heizwiderstand, beispielsweise eine elektrische Heizwendel, umfasst, wobei mittels einer Lüftereinrichtung der Kabinenheizeinrichtung, die eine oder mehrere Ventilatoren umfassen kann, die an dem Heizwiderstand erwärmte Luft innerhalb der Fahrerkabine verteilt.

Bei als Flurförderzeugen ausgebildeten Arbeitsmaschinen wird die elektrische Zusatzheizeinrichtung in der Regel im Bereich einer Frontwand bzw. eines Armaturenbretts der Fahrerkabine zentral eingebaut, wobei an der von der Zusatzheizeinrichtung gebildeten Baugruppe mehrere Luftaustrittsdüsen vorgesehen sind, um die an dem Heizwiderstand erwärmte Luft durch die Lüftereinrichtung in der Fahrerkabine zu verteilen.

Bei bekannten elektrischen Kabinenheizeinrichtungen kommt es aufgrund der Luftzirkulation des von der Lüftereinrichtung erzeugten Luftstroms der erwärmten Luft innerhalb der Fahrerkabine zu einer Umwälzung von Staub und Verunreinigungen, beispielsweise Pollen aus der Umgebung. Zusätzlich kommt es durch die Lüftereinrichtung zu einer Geräuschentwicklung innerhalb der Fahrerkabine. Die innerhalb der Fahrerkabine befindliche Bedienperson kann hierbei über die mehreren Lüftaustrittsdüsen den erwärmten Luftstrom regulieren und die Verteilung innerhalb der Fahrerkabine verteilen, um die Fahrerkabine nach den Bedürfnissen der Bedienperson zu erwärmen.

Bei bekannten elektrischen Kabinenheizeinrichtungen, bei denen an einem Heizwiderstand die Luft innerhalb der Fahrerkabine erwärmt und mit der Lüftereinrichtung innerhalb der Fahrerkabine verteilt wird, sammelt sich die erwärmte Luft unter dem Dach der Fahrerkabine, wodurch eine für die Bedienperson unangenehme Wärmeverteilung resultiert. Die bekannten elektrischen Zusatzheizungseinrichtungen haben einen schlechten Wirkungsgrad, da die Wärme zentral an einem Heizwiderstand erzeugt und aufwändig an den benötigten Stellen verteilt werden muss. Der aus dem schlechten Wirkungsgrad resultierende hohe elektrische Energieverbrauch führt insbesondere bei batterie-elektrisch betriebenen Arbeitsmaschinen zu einer Verringerung der Einsatzdauer der Arbeitsmaschine mit einer Batterieladung. Zudem verursachen bekannte elektrische Zusatzheizeinrichtungen, die als Zusatzbaugruppe in der Fahrerkabine, beispielsweise im Beinbereich an der Frontwand bzw. am dem Armaturenbrett der Fahrerkabine, angeordnet werden, einen erheblichen Platzbedarf, der insbesondere in kleinen Fahrerkabinen zu einer Einschränkung der Ergonomie führt.

Die US 4 133 574 offenbart ein batterie-elektrisch betriebenes Flurförderzeug, bei der innerhalb der Fahrerkabine mehrere elektrische Heizstäbe angeordnet sind, wobei mit Lüftern die erwärmte Luft in der Fahrerkabine verteilt wird.

Die US 3 920 105 offenbart ein elektrisch betriebenes Flurförderzeug, bei dem die Kabinenheizung durch Infrarotlampen im Dachbereich, elektrischen Heizstrahlern im Beinbereich und elektrischen Fußwärmern erfolgt.

Die WO 00/66380 A1 offenbart ein Fahrzeug mit einem verbrennungsmotorischen Antrieb durch einen Verbrennungsmotor, bei dem anstelle einer Wasserheizung, die die Abwärme des Verbrennungsmotors ausnutzt, eine elektrische Widerstandheizung des Fahrzeuginnenraums eingesetzt wird, um auch bei Verwendung von Verbrennungsmotoren, die eine geringe Abwärme produzieren, eine ausreichende Beheizung des Fahrzeuginnenraums zu ermöglichen.

Aus der DE 44 40 433 A1 ist ein Flächenheizelement bekannt, das Strahlungswärme abgibt und als Heizung eines Fahrerhauses eines Kraftfahrzeugs oder einer Arbeitsmaschine dient.

Der vorliegenden Erfindung liegt die Aufgabe zugrunde, eine gattungsgemäße batterie-elektrisch betriebene Arbeitsmaschine zur Verfügung zu stellen, bei der die Kabinenheizeinrichtung einen geringen Bauraumbedarf aufweist, mit der ein verbessertes Klima innerhalb der Fahrerkabine erzielbar ist und bei der der Energieverbrauch verringert ist.

Diese Aufgabe wird erfindungsgemäß dadurch gelöst, dass die Kabinenheizeinrichtung von mindestens einem elektrischen Wärmestrahlungs-Flächenheizelement, insbesondere einem Infrarot-Flächenheizelement, gebildet ist, das als Heizplatte innerhalb der Fahrerkabine eingebaut ist, wobei das Wärmestrahlungs-Flächenheizelement eine elektrisch leitfähige Materialschicht umfasst, die beim Anlegen einer elektrischen Spannung die elektrische Energie direkt in reine Wärmestrahlungsenergie umwandelt und diese abgibt. Elektrische Wärmestrahlungs-Flächenheizelemente arbeiten nach dem Prinzip der Wärmewellenverteilung und umfassen eine elektrisch leitfähige Materialschicht, beispielsweise ein Gewebe, das beim Anlegen einer elektrischen Spannung, bevorzugt einer Gleichspannung, die elektrische Energie direkt in reine Wärmestrahlungsenergie umwandelt, beispielsweise Infrarotwärmestrahlung. Die von dem Flächenheizelement abgegebene Wärmestrahlungsenergie hat die Eigenschaft, dass die beispielsweise von Infrarotstrahlen gebildete Wärmestrahlung nicht die Luft innerhalb der Fahrerkabine erwärmen, sondern die Oberflächen von Körpern und Bauteile innerhalb der Fahrerkabine erwärmen, die die Wärme an den Kabineninnenraum abgeben. Mit einer von elektrischen Wärmestrahlungs-Flächenheizelementen, insbesondere Infrarot-Flächenheizelementen, gebildeten Kabinenheizeinrichtung kann gegenüber bisherigen elektrischen Kabinenheizeinrichtung die Innenraumtemperatur bei gleichem Komfortempfinden um einige Grad Celsius geringer gewählt werden, wobei aufgrund der Strahlungswärme von der innerhalb der Fahrerkabine befindlichen Bedienperson ein behagliches und angenehmes Raumklima empfunden wird. Die geringere Erwärmung der Luft innerhalb der Fahrerkabine reduziert weiterhin das Austrocknen der Luft, wodurch das Wohlfühlgefühl der Bedienperson weiter erhöht wird. Zudem verursacht eine Kabinenheizeinrichtung mit Wärmestrahlungs-Flächenheizelementen keine Luftumwälzung innerhalb der Fahrerkabine, wodurch kein störender Luftzug für die Bedienperson und keine Staubaufwirbelung innerhalb der Fahrerkabine auftritt. Zudem wird bei einer Kabinenheizeinrichtung mit Wärmestrahlungs-Flächenheizelement, insbesondere einem Infrarot-Flächenheizelement, eine geringe Wärmeschichtung durch aufsteigende warme Luft erzielt, wodurch innerhalb der Fahrerkabine eine gleichmäßige Wärmeverteilung erzielbar ist. Bei einer Arbeitsmaschine mit einem batterie-elektrischen Antriebssystems ergeben sich besondere Vorteile, da die erfindungsgemäße Kabinenheizeinrichtung unter Verwendung von einem oder mehreren Wärmestrahlungs-Flächenheizelementen einen geringen elektrischen Energieverbrauch aufweist und eine Innenraumheizung der Fahrerkabine mit geringen Energie- und Wärmeverlusten ermöglicht. Bei einer batterie-elektrisch betriebenen Arbeitsmaschine kann daher mit einer erfindungsgemäßen elektrischen Kabinenheizeinrichtung eine verlängerte Betriebszeit der Arbeitsmaschine mit einer Batterieladung erzielt werden.

Während des Betriebs einer beispielsweise als Flurförderzeug ausgebildeten mobilen Arbeitsmaschine verlässt die Bedienperson häufig die Fahrerkabine, um ihrer Tätigkeit nachzugehen. Bei bisherigen elektrischen Kabinenheizeinrichtungen tritt hierdurch ein erheblicher Luftaustausch auf, der bei bisherigen Kabinenheizeinrichtungen, die die Luft innerhalb der Fahrerkabine erwärmen, zu einem hohen Energieverbrauch und Energieverlust führt. Mit einer erfindungsgemäßen Kabinenheizeinrichtung unter Verwendung von elektrischen Wärmestrahlungs-Flächenheizelementen, insbesondere Infrarot-Flächenheizelementen, kann auch beim häufigen Verlassen der Fahrerkabine ein angenehmes Klima innerhalb der Fahrerkabine bei geringem Energieeinsatz erzielt werden, da keine direkte Erwärmung der Luft innerhalb der Fahrerkabine erfolgt und beim Öffnen der Fahrerkabine geringe Wärmeverluste auftreten. Aufgrund des niedrigeren Innenraumtemperaturniveaus kann gegenüber bisherigen elektrischen Kabinenheizeinrichtungen der Energiebedarf durch eine kleinere Auslegung der erforderlichen Heizleistung verringert werden. Zudem kann durch entsprechenden Einbau und Anordnung der Wärmestrahlungs-Flächenheizelemente, insbesondere der Infrarot-Flächenheizelemente, auf einfache Weise eine exakte und punktgenaue Beheizung bestimmter Kabinenbereiche ermöglicht werden, die eine weitere Reduzierung der eingesetzten elektrischen Energie ermöglicht. Ein weiterer Vorteil der erfindungsgemäßen Kabinenheizeinrichtung besteht darin, dass die Wärmenergie an den beheizten Oberflächen gespeichert wird, so dass eine Kondenswasserbildung oder ein Beschlagen der Scheiben der Fahrerkabine wirksam vermieden werden kann.

Gemäß einer bevorzugten Ausführungsform der Erfindung ist das Wärmestrahlungs-Flächenheizelement an einem Fahrerarbeitsplatzbauteil innerhalb der Fahrerkabine angeordnet oder in das Fahrerarbeitsplatzbauteil integriert. Die Wärmestrahlungs-Flächenheizelemente können hierdurch platzsparend an bereits innerhalb der Fahrerkabine befindliche Bauteilen oder Verkleidungselementen des von der Fahrerkabine gebildeten Fahrerarbeitsplatzes angebaut bzw. in diese bereits vorhandenen Bauteile oder Verkleidungselemente integriert werden. Die erfindungsgemäße Kabinenheizeinrichtung verursacht somit keinen zusätzlichen Bauraum und benötigt keinen zusätzlichen Platz innerhalb der Fahrerkabine, der zu einer Einschränkung der Ergonomie für die Bedienperson führen würde, und kann auf einfache Weise an die bereits vorhandenen Fahrerarbeitsplatzbauteile angebaut oder in diese Bauteile eingebaut werden. Mit einem derartigen Anbau bzw. Einbau der Flächenheizelemente in bereits vorhandene Fahrerarbeitsplatzbauteile kann weiterhin eine einfache Anpassung der Kabinenheizeinrichtung an Kundenwünsche und Einsatzanforderungen sowie Einsatzbedingungen erzielt werden. Der Anbau oder Einbau eines Wärmestrahlungs-Flächenheizelements an ein bereits bestehendes Bauteil der Fahrerkabine ermöglicht weiterhin eine einfache Montage mit niedrigen Installationskosten. Als Fahrerarbeitsplatzbauteil im Sinne der Erfindung sollen hierbei die Bauteile der Fahrerkabine selbst und die innerhalb der Fahrerkabine angeordneten Bauteile der Arbeitsmaschine angesehen werden.

Ein günstiger Einbauort eines Wärmestrahlungs-Flächenheizelements ist bei einer Fahrerkabine einer Arbeitsmaschine im Bereich von mindestens einem von einem Dachholm der Fahrerkabine gebildeten Fahrerarbeitsplatzbauteil gegeben. Mit einer derartigen Anordnung kann ein platzsparender Einbau des Wärmestrahlungs-Flächenheizelements erzielt werden, wobei weiterhin ein Beschlagen und Abtauen der Scheiben der Fahrerkabine auf einfache Weise erzielt werden kann.

Das Wärmestrahlungs-Flächenheizelement kann unmittelbar an den Dachholmen angebracht werden oder gemäß einer bevorzugten Ausgestaltungsform der Erfindung an ein Verkleidungselement des Dachholms angebaut oder in das Verkleidungselement eingebaut und somit integriert werden.

Ein weiterer günstiger Einbauort eines Wärmestrahlungs-Flächenheizelements einer erfindungsgemäßen Fahrerkabine stellt eine einen Fahrersitz tragende Abdeckhaube als Fahrerarbeitsplatzbauteil dar, wobei das Wärmestrahlungs-Flächenheizelement im Bereich der Abdeckhaube angeordnet ist. Mit einem Flächenheizelement an der Abdeckhaube kann eine große Abstrahlungsfläche zur Verfügung gestellt werden, die bei einer geringen Abstrahlungsleistung eine Kabinenheizung ermöglicht.

Sofern die Abdeckhaube mit einem Schallisolierungselement, beispielsweise einer Isolationsmatte versehen ist, ergeben sich besondere Vorteile hinsichtlich eines einfachen Aufbaus, wenn das Wärmestrahlungs-Flächenheizelement an das Schallisolierungselement angebaut oder in dieses eingebaut bzw. integriert ist.

Sofern gemäß einer vorteilhaften Ausgestaltungsform der Erfindung ein Wärmestrahlungs-Flächenheizelement im Bereich einer Bodenplatte der Fahrerkabine als Fahrerarbeitsplatzbauteil angeordnet ist, kann im Fuß- und Beinbereich der Bedienperson in platzsparender Weise eine Beheizung erfolgen.

Sofern an der Bodenplatte eine Bodenmatte angeordnet ist, kann das Wärmestrahlungs-Flächenheizelement an der Bodenmatte angebaut oder in die Bodenmatte eingebaut bzw. integriert werden, wodurch sich ein geringer Bauaufwand ergibt.

Weitere günstige Einbauorte für ein Wärmestrahlungs-Flächenheizelement einer erfindungsgemäßen Kabinenheizeinrichtung befinden sich im Bereich einer Frontwand, insbesondere eines Armaturenbretts, und/oder einer Rückwand der Fahrerkabine als Fahrerarbeitsplatzbauteil. An diesen Anbringungsstellen kann ebenfalls eine hohe Abstrahlungsfläche ausgebildet werden, um mit einer geringen Abstrahlleistung eine elektrische Kabinenheizung zu ermöglichen.

Das Flächenheizelement kann hierbei direkt an der Frontwand bzw. dem Armaturenbrett oder der Rückwand angeordnet werden oder an ein Verkleidungselement der Frontwand bzw. des Armaturenbretts oder der Rückwand angebaut bzw. in dieses eingebaut und integriert ist.

Ein weiterer günstiger Einbauort für ein Flächenheizelement einer erfindungsgemäßen Kabinenheizeinrichtung stellt die Türinnenseite einer Kabinentür als Fahrerarbeitsplatzbauteil dar.

Sofern die Kabinentür mit einem Innenverkleidungselement versehen ist, kann das Wärmestrahlungs-Flächenheizelement mit geringem Bauaufwand an das Innenverkleidungselement angebaut oder darin eingebaut und integriert werden.

Zudem befindet sich ein günstiger Einbauort eines Flächenheizelements einer erfindungsgemäßen Kabinenheizeinrichtung im Bereich eines Daches der Fahrerkabine als Fahrerarbeitsplatzbauteil.

Das Flächenheizelement kann direkt an dem Dach angeordnet werden. Sofern das Dach der Fahrerkabine mit einem Dachverkleidungselement versehen ist, kann das Wärmestrahlungs-Flächenheizelement an das Dachverkleidungselement angebaut oder darin eingebaut und integriert werden.

Zudem ist es gemäß einer vorteilhaften Weiterbildung der Erfindung möglich, ein Wärmestrahlungs-Flächenheizelement in einem Sitzpolster und/oder einem Rückenpolster des Fahrersitzes als Fahrerarbeitsplatzbauteil anzuordnen.

Sofern die Fahrerkabine mit einer Armauflage, insbesondere einer am Fahrersitz angeordneten Armauflage, versehen ist, kann ein Wärmestrahlungs-Flächenheizelement im Bereich der Armauflage als Fahrerarbeitsplatzbauteil angeordnet werden. Mobile Arbeitsmaschinen sind in der Regel mit Bedienelementen versehen, die an einer Armlehne angeordnet sind. Die Anordnung eines Flächenheizelements an oder in der Armauflage der Armlehne ermöglicht eine gezielte Beheizung im Bereich des die Bedienelemente betätigenden und auf der Armauflage befindlichen Armes der Bedienperson.

Das Wärmestrahlungs-Flächenheizelement kann als starre oder flexible Heizplatte ausgebildet werden. Bei einem Einbau des Flächenheizelements in ein Verkleidungselement der Fahrerkabine kann hierbei ein einfacher Aufbau gebildet werden. Eine flexible Heizplatte kann bevorzugt in Textilien des Fahrersitzes oder in die Armauflage eingebaut werden. Eine flexible Heizplatte, beispielsweise eine Heizmatte oder eine Heizfolie, weist weiterhin dämpfende Eigenschaften auf, wodurch auf einfache Weise ein Anstoßschutz für die Bedienperson gebildet werden kann, wenn die flexible Heizplatte an einem Fahrerarbeitsplatzbauteil oder einem Verkleidungsbauteil angebaut ist.

Gemäß einer bevorzugten Ausführungsform der Erfindung sind mehrere Wärmestrahlungs-Flächenheizelemente innerhalb der Fahrerkabine angeordnet, wobei die Wärmestrahlungs-Flächenheizelemente einzeln, in Gruppen oder zusammen betätigt werden können. Mit mehreren Flächenheizelementen kann eine exakte und punktgenaue Beheizung bestimmter Kabinenbereiche auf einfache Weise ermöglicht werden. Die individuelle Regulierung mehrerer Flächenheizelemente ermöglicht eine einfache Anpassung der erfindungsgemäßen Kabinenheizeinrichtung an den Wärmebedarf, die Kabinengröße und die Wünsche der Bedienperson. Bei einer gruppenweisen oder gemeinsamen Betätigung mehrerer Flächenheizelemente können auf einfache Weise für bestimmte Anforderungen, beispielweise zum Abtauen von Scheiben, unterschiedliche Heizprogramme erzielt werden.

Gemäß einer vorteilhaften Ausgestaltungsform der Erfindung ist die Arbeitsmaschine als explosionsgeschütztes Fahrzeug ausgebildet. Explosionsgeschütze Fahrzeuge werden in explosionsgefährdeten Umgebungen eingesetzt und sind hinsichtlich der elektrischen Komponenten und Bauteile entsprechend anzupassen. Zudem sind der Fahrzeugsitz und die Kunststoffteile, insbesondere die Verkleidungselemente, innerhalb der Fahrerkabine, elektrisch leitfähig auszuführen, um Funkenbildung durch elektrostatische Aufladung zu vermeiden. Die erfindungsgemäßen Flächenheizelemente sich aufgrund der elektrisch leitfähige Materialschicht elektrisch leitfähig und erzeugen keine elektromagnetische Strahlung. Durch die Anordnung oder Integration der erfindungsgemäßen Flächenheizelemente in Fahrerkabinenbauteilen, beispielsweise diverse Verkleidungselementen, die Bodenmatte, den Fahrzeugsitz, die Armlehne, eine Schallisolierung oder Textilien, können somit die Anforderungen an diese Bauteile hinsichtlich der elektrischen Leitfähigkeit erfüllt werden und kann weiterhin auf einfache Weise eine elektrische Kabinenheizeinrichtung zur Verfügung gestellt werden.

Weitere Vorteile und Einzelheiten der Erfindung werden anhand des in der schematischen Figur dargestellten Ausführungsbeispiels näher erläutert.

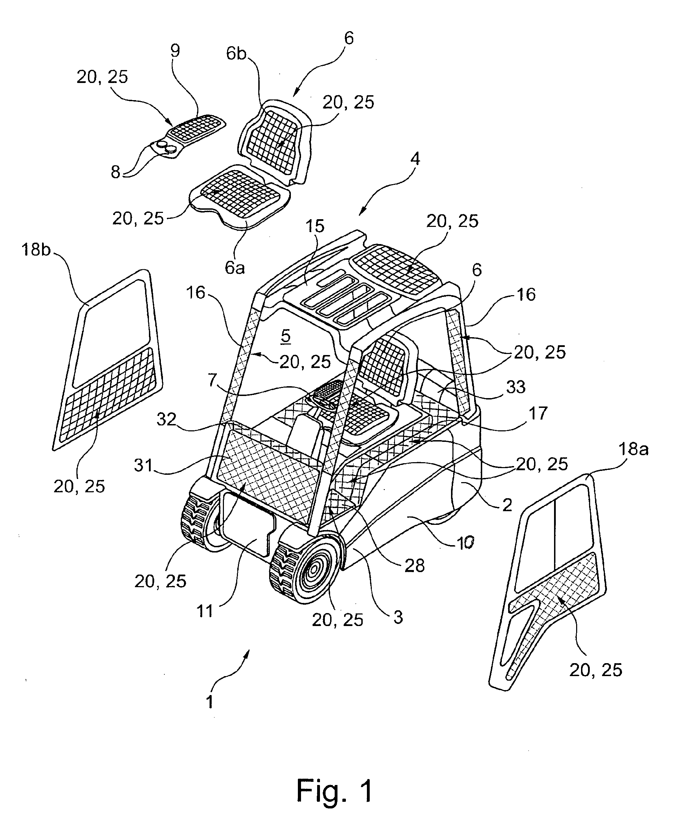

In der Figur 1 ist ein als Gegengewichtsgabelstapler ausgebildetes Flurförderzeug 1 als Beispiel einer mobilen Arbeitsmaschine dargestellt.

Das Flurförderzeug 1 ist im frontseitigen Bereich mit einem nicht näher dargestellten Hubgerüst zur Aufnahme von Lasten und im heckseitigen Bereich mit einem Gegengewicht 2 versehen. Das Flurförderzeug 1 umfasst eine an einem Fahrzeugkörper 3 angeordnete, bevorzugt geschlossene Fahrerkabine 4, innerhalb der sich ein Fahrerarbeitsplatz 5 für eine Bedienperson befindet. Der Fahrerarbeitsplatz 5 umfasst im vorliegenden Ausführungsbeispiel einen Fahrersitz 6, eine beispielsweise von einem Lenkrad gebildete Lenkeinrichtung 7 und mehrere Steuer- und Bedienelemente, insbesondere zur Steuerung eines Fahrantriebs und einer Arbeitshydraulik, die einen Hubantrieb und einen Neigeantrieb des Hubgerüsts sowie gegebenenfalls einen Zusatzverbraucher umfasst, beispielsweise einen Seitenschieberantrieb für ein am Hubgerüst anhebbar und absenkbar angeordnetes Lastaufnahmemittel. Die Steuer- und Bedienelemente umfassen mindestens ein Pedal zur Steuerung des Fahrantriebs und ein oder mehrere Bedienelemente 8, beispielsweise Joysticks, zur Steuerung der Arbeitshydraulik, die an der Vorderseite einer Armauflage 9 angeordnet sind. Die Armauflage 9 ist bevorzugt an dem Fahrersitz 6 als Armlehne angeordnet. Es ist alternativ möglich, die Armauflage 9 seitlich neben dem Fahrersitz 6 anzuordnen.

Das dargestellte Flurförderzeug 1 ist als batterie-elektrisch betriebenes Flurförderzeug 1 ausgebildet, wobei als elektrische Energiequelle eine Traktionsbatterie vorgesehen ist, die im Fahrzeugkörper 3 in einem unterhalb der Fahrerkabine 4 angeordneten Batteriefach 10 angeordnet ist.

Das elektrische Antriebssystem des Flurförderzeugs 1 umfasst mindestens einen in oder an einer Antriebsachse 11 angeordneten elektrischen Fahrmotor als Fahrantrieb, der beispielsweise von einem als Asynchronmotor ausgebildeten Drehstrommotor gebildet ist. Weiterhin umfasst das elektrische Antriebssystem des Flurförderzeugs 1 mindestens ein nicht näher dargestelltes elektrisches Pumpenaggregat, das eine von einem Drehstrommotor, beispielsweise einem Asynchronmotor, angetriebene Hydraulikpumpe umfasst, mit der die Verbraucher der Arbeitshydraulik, die von dem Hubantrieb, dem Neigeantrieb und dem gegebenenfalls vorhandenen Zusatzverbraucher gebildet sind, mit Druckmittel versorgbar sind.

Die den Fahrerarbeitsplatz 5 umschließende Fahrerkabine 4 umfasst ein Dach 15, das von mehreren im Wesentlichen vertikal angeordneten vorderen und hinteren Dachholmen 16 getragen ist. Der Fahrersitz 6 befindet sich auf einer Abdeckhaube 17, unterhalb der das Batteriefach 10 für die Traktionsbatterie angeordnet ist. Die Seitenbereiche der Fahrerkabine 4 bilden Einstiegsöffnungen, die mittels einer linken Kabinentür 18a und einer rechten Kabinentür 18b verschließbar sind.

In dem von der Fahrerkabine 4 umschlossenen Fahrerarbeitsplatz 5 ist eine Kabinenheizeinrichtung 20 vorgesehen, die erfindungsgemäß mindestens ein elektrisches Wärmestrahlungs-Flächenheizelement 25, insbesondere ein Infrarot-Flächenheizelement, umfasst, das als starre oder flexible Heizplatte innerhalb der Fahrerkabine 4 eingebaut ist und an ein bereits vorhandenes Fahrerarbeitsplatzbauteil angebaut oder in dieses eingebaut bzw. integriert ist.

Das Wärmestrahlungs-Flächenheizelement 25 kann im Bereich eines Sitzpolsters 6a und/oder eines Rückenpolsters 6b der Rückenlehne des Fahrersitzes 6 als Fahrerarbeitsplatzbauteil angeordnet werden, wobei das Wärmestrahlungs-Flächenheizelement 25 in die Sitztextilen eingebaut werden kann.

Ein weiterer möglicher Einbauort eines Wärmestrahlungs-Flächenheizelements 25 befindet sich an der Armauflage 9 oder einer Armlehne als Fahrerarbeitsplatzbauteil.

Weiterhin kann ein Wärmestrahlungs-Flächenheizelement 25 an der den Fahrersitz 6 tragenden Abdeckhaube 17 als Fahrerarbeitsplatzbauteil angeordnet werden. Sofern die Abdeckhaube 17 mit einem beispielsweise als Schallisolationsmatte ausgebildeten Schallisolierungselement versehen ist, kann das Wärmestrahlungs-Flächenheizelement 25 in das Schallisolierungselement eingebaut oder an dieses angebaut werden.

Darüber hinaus befindet sich ein möglicher Einbauort eines Wärmestrahlungs-Flächenheizelements 25 an einer Bodenplatte 28 des Fahrerarbeitsplatzes 5 als Fahrerarbeitsplatzbauteil, wobei das Wärmestrahlungs-Flächenheizelement 25 in einer auf der Bodenplatte 28 angeordneten Bodenmatte eingebaut oder integriert werden kann.

Weitere mögliche Einbauorte für ein Wärmestrahlungs-Flächenheizelement 25 befinden sich an den das Dach 15 tragenden Dachholmen 16 als Fahrerarbeitsplatzbauteil, wobei das Wärmestrahlungs-Flächenheizelement 25 in ein entsprechendes Verkleidungselement eingebaut bzw. integriert werden kann oder direkt an den Dachholmen 16 befestigt werden kann.

Ein weiterer Einbauort eines Wärmestrahlungs-Flächenheizelements 25 als Kabinenheizung befindet sich im Bereich des Daches 15 der Fahrerkabine 5 als Fahrerarbeitsplatzbauteil, wobei das Wärmestrahlungs-Flächenheizelement 25 in ein Dachverkleidungselement eingebaut bzw. integriert werden kann oder direkt an dem Dach 15 angeordnet werden kann.

Darüber hinaus kann ein Wärmestrahlungs-Flächenheizelement 25 im Bereich der Innenseite der Kabinentür 18a bzw. 18b als Fahrerarbeitsplatzbauteil angeordnet werden, beispielsweise in ein als Innenverkleidung ausgebildetes Verkleidungselement der Kabinentür 18a bzw. 18b eingebaut bzw. integriert werden.

Weiterhin kann ein Wärmestrahlungs-Flächenheizelement 25 im Bereich einer Frontwand 31 oder eines im Bereich der Frontwand 31 angeordneten Armaturenbrettes 32 und/oder einer Rückwand 33 der Fahrerkabine 4 als Fahrerarbeitsplatzbauteil angeordnet werden und beispielsweise in ein entsprechendes Verkleidungselement bzw. das Armaturenbrett eingebaut bzw. integriert oder daran befestigt werden.

Das Wärmestrahlungs-Flächenheizelement 25 kann hierbei als Einzelplatte ausgebildet werden oder einen modularen Aufbau aus mehreren Platten aufweisen, wodurch durch Zuschalten der entsprechende Platten eine Kabinenheizeinrichtung 20 mit mehreren Heizstufen gebildet werden kann.

Beim Einbau mehrerer Wärmestrahlungs-Flächenheizelemente 25 in der Fahrerkabine 4 ergeben sich Vorteile, wenn die Wärmestrahlungs-Flächenheizelemente 25 in sinnfälligen Gruppen geschaltet und reguliert werden werden können. Eine Sitzheizung kann beispielsweise durch die Wärmestrahlungs-Flächenheizelemente 25 in dem Fahrersitz 6 sowie der Armauflage 9 gebildet werden. Eine weitere Heizstufe kann durch die Wärmestrahlungs-Flächenheizelemente 25 an den Innenverkleidungen der Kabinentüren 18a, 18b, im Dach 15 und der Abdeckhaube 17 gebildet werden sowie der Frontwand 31, dem Armaturenbrett 32 und/oder der Rückwand 33 gebildet werden. Eine Heizstufe zum Abtauen der Kabinenscheiben kann beispielsweise von den Wärmestrahlungs-Flächenheizelementen 25 an den Dachholmen 16 gebildet werden.

Der Einbau bzw. die Integration oder der Anbau eines Wärmestrahlungs-Flächenheizelements 25 in ein bereits vorhandenes Fahrerarbeitsplatzbauteil innerhalb der Fahrerkabine 4 ermöglicht eine einfache Montage der erfindungsgemäßen Kabinenheizeinrichtung. Zudem benötigt die erfindungsgemäße Kabinenheizeinrichtung keinen zusätzlichen Bauraum, wobei insbesondere in engen Fahrerkabinen von Flurförderzeugen ein verbessertes Platzangebot und eine verbesserte Ergonomie erzielt werden. Durch entsprechende Wahl und Anordnung der Flächenheizelemente 25 kann in Verbindung mit einer individuellen Regulierung des Flächenheizelements 25 hierbei auf einfache Weise der Wärmebedarf an die Einsatzbedingungen, die Kabinengröße und Kundenwünsche sowie Fahrerwünsche angepasst werden, wobei weiterhin eine gezielte und punktgenaue Beheizung bestimmter Kabinenbereiche ermöglicht wird. Die erfindungsgemäße Kabinenheizeinrichtung ist aufgrund der Wärmestrahlungs-Flächenheizelemente 25 und dem Entfall einer bei bekannten Kabinenheizeinrichtungen erforderlichen Lüftereinrichtung weiterhin wartungs- und verschleißfrei und weist eine hohe Lebensdauer auf. Darüber hinaus sind die Wärmestrahlungs-Flächenheizelemente 25 unempfindlich gegenüber Stößen, Vibrationen, Feuchtigkeit und sonstigen Umwelteinflüssen.

Als integraler Einbau eines Flächenheizelements in ein Verkleidungselement soll hierbei ebenfalls angesehen werden, wenn das Flächenheizelement selbst ein Verkleidungsbauteil, beispielsweise die Türinnenverkleidung, die Dachverkleidung oder die Verkleidung der Dachholme sowie die Verkleidung der Frontwand oder der Rückwand bildet.

Durch das absenkbare Temperaturniveau innerhalb der Fahrerkabine 4 und die dadurch mögliche Verringerung der erforderlichen Heizleistung wird in Verbindung mit den verringerten Wärmeverlusten beim Öffnen der Fahrerkabine eine Kabinenheizeinrichtung mit einem geringen elektrischen Energieverbrauch ermöglicht, die insbesondere bei batterie-elektrisch betriebenen Arbeitsmaschinen Vorteile ergibt. Der Entfall einer Luftzirkulation bei der erfindungsgemäßen Kabinenheizeinrichtung in Verbindung mit dem absenkbaren Temperaturniveau führt zu einem verbesserten Wohlfühlgefühl innerhalb der Fahrerkabine, wobei Luftzugerscheinungen und Staubverwirbelungen vermieden werden und eine gleichmäßige Wärmeverteilung innerhalb der Fahrerkabine erzielt werden kann.

Mit der erfindungsgemäßen elektrischen Kabinenheizeinrichtung kann insbesondere bei batterie-elektrisch betriebenen Arbeitsmaschinen, insbesondere Flurförderzeugen, wie beispielsweise Gegengewichtsgabelstaplern, Schubmaststaplern, Hochregalstaplern, Hochregalkommissionierern oder Schleppern, mit einer geschlossenen Fahrerkabine eine elektrische Kabinenheizeinrichtung als Zusatzausrüstung zur Verfügung gestellt werden, die einen geringen Bauraumbedarf in der Fahrerkabine aufweist, mit der ein verbessertes Klima innerhalb der Fahrerkabine erzielbar ist und die einen geringen Energieverbrauch bei geringen Wärmeverlusten aufweist.

## Patentansprüche

1. Mobile Arbeitsmaschine, insbesondere Flurförderzeug, mit einer Fahrerkabine und einer elektrischen Kabinenheizeinrichtung, wobei die Arbeitsmaschine ein batterie-elektrisches Antriebssystem aufweist, **dadurch gekennzeichnet, dass** die Kabinenheizeinrichtung (20) von mindestens einem elektrischen Wärmestrahlungs-Flächenheizelement (25), insbesondere einem Infrarot-Flächenheizelement, gebildet ist, das als Heizplatte innerhalb der Fahrerkabine (4) eingebaut ist, wobei das Wärmestrahlungs-Flächenheizelement (25) eine elektrisch leitfähige Materialschicht umfasst, die beim Anlegen einer elektrischen Spannung die elektrische Energie direkt in reine Wärmestrahlungsenergie umwandelt und diese abgibt.

2. Mobile Arbeitsmaschine nach Anspruch 1, **dadurch gekennzeichnet, dass** das Wärmestrahlungs-Flächenheizelement (25) an einem Fahrerarbeitsplatzbauteil (16; 17; 28; 31; 32; 33; 18a; 18b; 15; 6a; 6b; 9) innerhalb der Fahrerkabine (4) angeordnet ist oder in das Fahrerarbeitsplatzbauteil (16; 17; 28; 31; 32; 33; 18a; 18b; 15; 6a; 6b; 9) integriert ist.

3. Mobile Arbeitsmaschine nach Anspruch 1 oder 2, **dadurch gekennzeichnet, dass** das Wärmestrahlungs-Flächenheizelement (25) im Bereich von mindestens einem Dachholm (16) der Fahrerkabine (4) angeordnet ist.

4. Mobile Arbeitsmaschine nach Anspruch 3, **dadurch gekennzeichnet, dass** der Dachholm (16) mit einem Verkleidungselement versehen ist, wobei das Wärmestrahlungs-Flächenheizelement (25) an das Verkleidungselement angebaut oder in das Verkleidungselement integriert ist.

5. Mobile Arbeitsmaschine nach einem der Ansprüche 1 bis 4, **dadurch gekennzeichnet, dass** innerhalb der Fahrerkabine (4) eine einen Fahrersitz (6) tragenden Abdeckhaube (17) angeordnet ist, wobei das Wärmestrahlungs-Flächenheizelement (25) im Bereich der Abdeckhaube (17) angeordnet ist.

6. Mobile Arbeitsmaschine nach Anspruch 5, **dadurch gekennzeichnet, dass** die Abdeckhaube (17) mit einem Schallisolierungselement versehen ist, wobei das Wärmestrahlungs-Flächenheizelement (25) an das Schallisolierungselement angebaut oder in das Schallisolierungselement integriert ist.

7. Mobile Arbeitsmaschine nach einem der Ansprüche 1 bis 6, **dadurch gekennzeichnet, dass** das Wärmestrahlungs-Flächenheizelement (25) im Bereich einer Bodenplatte (28) der Fahrerkabine (4) angeordnet ist.

8. Mobile Arbeitsmaschine nach Anspruch 7, **dadurch gekennzeichnet, dass** an der Bodenplatte (28) eine Bodenmatte angeordnet ist, wobei das Wärmestrahlungs-Flächenheizelement (25) an der Bodenmatte angebaut oder in die Bodenmatte integriert ist.

9. Mobile Arbeitsmaschine nach einem der Ansprüche 1 bis 8, **dadurch gekennzeichnet, dass** das Wärmestrahlungs-Flächenheizelement (25) im Bereich einer Frontwand (31), insbesondere eines Armaturenbretts (32), und/oder einer Rückwand (33) der Fahrerkabine (4) angeordnet ist.

10. Mobile Arbeitsmaschine nach Anspruch 9, **dadurch gekennzeichnet, dass** die Frontwand (31) und/oder die Rückwand (33) mit einem Verkleidungselement versehen ist, wobei das Wärmestrahlungs-Flächenheizelement (25) an das Verkleidungselement angebaut oder in das Verkleidungselement integriert ist.

11. Mobile Arbeitsmaschine nach einem der Ansprüche 1 bis 10, **dadurch gekennzeichnet, dass** die Fahrerkabine (4) mit mindestens einer Kabinentür (18a; 18b) versehen ist, wobei das Wärmestrahlungs-Flächenheizelement (25) im Bereich der Türinnenseite angeordnet ist.

12. Mobile Arbeitsmaschine nach Anspruch 11, **dadurch gekennzeichnet, dass** die Kabinentür (18a; 18b) mit einem Innenverkleidungselement versehen ist, wobei das Wärmestrahlungs-Flächenheizelement (25) an das Innenverkleidungselement angebaut oder in das Innenverkleidungselement integriert ist.

13. Mobile Arbeitsmaschine nach einem der Ansprüche 1 bis 12, **dadurch gekennzeichnet, dass** das Wärmestrahlungs-Flächenheizelement (25) im Bereich eines Daches (15) der Fahrerkabine (4) angeordnet ist.

14. Mobile Arbeitsmaschine nach Anspruch 13, **dadurch gekennzeichnet, dass** das Dach (15) der Fahrerkabine (4) mit einem Dachverkleidungselement versehen ist, wobei das Wärmestrahlungs-Flächenheizelement (25) an das Dachverkleidungselement angebaut oder in das Dachverkleidungselement integriert ist.

15. Mobile Arbeitsmaschine nach einem der Ansprüche 1 bis 14, **dadurch gekennzeichnet, dass** die Fahrerkabine (4) mit einem Fahrersitz (6) versehen ist, wobei das Wärmestrahlungs-Flächenheizelement (25) in einem Sitzpolster (6a) und/oder einem Rückenpolster (6b) des Fahrersitzes (6) angeordnet ist.

16. Mobile Arbeitsmaschine nach einem der Ansprüche 1 bis 15, **dadurch gekennzeichnet, dass** die Fahrerkabine (4) mit einer Armauflage (9), insbesondere einer am Fahrersitz (6) angeordneten Armauflage (9) versehen ist, wobei das Wärmestrahlungs-Flächenheizelement (25) im Bereich der Armauflage (9) angeordnet ist.

17. Mobile Arbeitsmaschine nach einem der Ansprüche 1 bis 16, **dadurch gekennzeichnet, dass** das Wärmestrahlungs-Flächenheizelement (25) als starre oder flexible Heizplatte ausgebildet ist.

18. Mobile Arbeitsmaschine nach einem der Ansprüche 1 bis 17, **dadurch gekennzeichnet, dass** mehrere Wärmestrahlungs-Flächenheizelemente (25) innerhalb der Fahrerkabine (4) angeordnet sind, wobei die Wärmestrahlungs-Flächenheizelemente (25) einzeln, in Gruppen oder zusammen betätigt werden können.

19. Mobile Arbeitsmaschine nach einem der Ansprüche 1 bis 18, **dadurch gekennzeichnet, dass** die Arbeitsmaschine als explosionsgeschütztes Fahrzeug ausgebildet ist.

## Claims

1. Mobile work machine, in particular industrial truck, with a driver's cab and an electric cab heating device, wherein the work machine has an electric battery drive system, **characterized in that** the cab heating device (20) is formed by at least one electric heat-radiation sheet-type heating element (25), in particular an infrared sheet-type heating element, which is installed as a heating plate within the driver's cab (4), wherein the heat-radiation sheet-type heating element (25) comprises an electrically conductive material layer which, on application of an electrical voltage, converts the electrical energy directly into pure heat-radiation energy and outputs the latter.

2. Mobile work machine according to Claim 1, **characterized in that** the heat-radiation sheet-type heating element (25) is arranged on a driver's workstation component (16; 17; 28; 31; 32; 33; 18a; 18b; 15; 6a; 6b; 9) within the driver's cab (4) or is integrated in the driver's workstation component (16; 17; 28; 31; 32; 33; 18a; 18b; 15; 6a; 6b; 9) .

3. Mobile work machine according to Claim 1 or 2, **characterized in that** the heat-radiation sheet-type heating element (25) is arranged in the region of at least one roof pillar (16) of the driver's cab (4).

4. Mobile work machine according to Claim 3, **characterized in that** the roof pillar (16) is provided with a lining element, wherein the heat-radiation sheet-type heating element (25) is attached to the lining element or is integrated in the lining element.

5. Mobile work machine according to one of Claims 1 to 4, **characterized in that** a covering hood (17) supporting a driver's seat (6) is arranged within the driver's cab (4), wherein the heat-radiation sheet-type heating element (25) is arranged in the region of the covering hood (17).

6. Mobile work machine according to Claim 5, **characterized in that** the covering hood (17) is provided with a sound insulation element, wherein the heat-radiation sheet-type heating element (25) is attached to the sound insulation element or is integrated in the sound insulation element.

7. Mobile work machine according to one of Claims 1 to 6, **characterized in that** the heat-radiation sheet-type heating element (25) is arranged in the region of a floor panel (28) of the driver's cab (4).

8. Mobile work machine according to Claim 7, **characterized in that** a floor mat is arranged on the floor panel (28), wherein the heat-radiation sheet-type heating element (25) is attached to the floor mat or is integrated in the floor mat.

9. Mobile work machine according to one of Claims 1 to 8, **characterized in that** the heat-radiation sheet-type heating element (25) is arranged in the region of a front wall (31), in particular a dashboard (32), and/or in the region of a rear wall (33) of the driver's cab (4).

10. Mobile work machine according to Claim 9, **characterized in that** the front wall (31) and/or the rear wall (33) is provided with a lining element, wherein the heat-radiation sheet-type heating element (25) is attached to the lining element or is integrated in the lining element.

11. Mobile work machine according to one of Claims 1 to 10, **characterized in that** the driver's cab (4) is provided with at least one cab door (18a; 18b), wherein the heat-radiation sheet-type heating element (25) is arranged in the region of the inside of the door.

12. Mobile work machine according to Claim 11, **characterized in that** the cab door (18a; 18b) is provided with an interior lining element, wherein the heat-radiation sheet-type heating element (25) is attached to the interior lining element or is integrated in the interior lining element.

13. Mobile work machine according to one of Claims 1 to 12, **characterized in that** the heat-radiation sheet-type heating element (25) is arranged in the region of a roof (15) of the driver's cab (4).

14. Mobile work machine according to Claim 13, **characterized in that** the roof (15) of the driver's cab (4) is provided with a roof lining element, wherein the heat-radiation sheet-type heating element (25) is attached to the roof lining element or is integrated in the roof lining element.

15. Mobile work machine according to one of Claims 1 to 14, **characterized in that** the driver's cab (4) is provided with a driver's seat (6), wherein the heat-radiation sheet-type heating element (25) is arranged in a seat cushion (6a) and/or in a back cushion (6b) of the driver's seat (6).

16. Mobile work machine according to one of Claims 1 to 15, **characterized in that** the driver's cab (4) is provided with an armrest (9), in particular an armrest (9) arranged on the driver's seat (6), wherein the heat-radiation sheet-type heating element (25) is arranged in the region of the armrest (9).

17. Mobile work machine according to one of Claims 1 to 16, **characterized in that** the heat-radiation sheet-type heating element (25) is designed as a rigid or flexible heating plate.

18. Mobile work machine according to one of Claims 1 to 17, **characterized in that** a plurality of heat-radiation sheet-type heating elements (25) are arranged within the driver's cab (4), wherein the heat-radiation sheet-type heating elements (25) can be actuated individually, in groups or together.

19. Mobile work machine according to one of Claims 1 to 18, **characterized in that** the work machine is designed as an explosion-protected vehicle.

## Revendications

1. Machine de travail mobile, en particulier chariot de manutention, comprenant une cabine de conducteur et un système de chauffage électrique de la cabine, la machine de travail présentant un système d'entraînement électrique par batterie, **caractérisée en ce que** le système de chauffage de la cabine (20) est formé par au moins un élément chauffant électrique plat à rayonnement thermique (25), en particulier un élément chauffant plat à infrarouge, qui est intégré en tant que plaque chauffante à l'intérieur de la cabine de conducteur (4), l'élément chauffant plat à rayonnement thermique (25) comprenant une couche de matériau électriquement conductrice qui, lors de l'application d'une tension électrique, convertit directement l'énergie électrique en énergie de rayonnement thermique pure et délivre celle-ci.

2. Machine de travail mobile selon la revendication 1, **caractérisée en ce que** l'élément chauffant plat à rayonnement thermique (25) est disposé au niveau d'un composant de poste de travail du conducteur (16 ; 17 ; 28 ; 31 ; 32 ; 33 ; 18a ; 18b ; 15 ; 6a ; 6b ; 9) à l'intérieur de la cabine de conducteur (4) ou est intégré dans le composant de poste de travail du conducteur (16 ; 17 ; 28 ; 31 ; 32 ; 33 ; 18a ; 18b ; 15 ; 6a ; 6b ; 9).

3. Machine de travail mobile selon la revendication 1 ou 2, **caractérisée en ce que** l'élément chauffant plat à rayonnement thermique (25) est disposé dans la région d'au moins un longeron de toit (16) de la cabine de conducteur (4).

4. Machine de travail mobile selon la revendication 3, **caractérisée en ce que** le longeron de toit (16) est pourvu d'un élément d'habillage, l'élément chauffant plat à rayonnement thermique (25) étant monté sur l'élément d'habillage ou étant intégré dans l'élément d'habillage.

5. Machine de travail mobile selon l'une quelconque des revendications 1 à 4, **caractérisée en ce qu'**à l'intérieur de la cabine de conducteur (4) est disposé un capot (17) de recouvrement portant un siège de conducteur (6), l'élément chauffant plat à rayonnement thermique (25) étant disposé dans la région du capot de recouvrement (17).

6. Machine de travail mobile selon la revendication 5, **caractérisée en ce que** le capot de recouvrement (17) est pourvu d'un élément d'isolation phonique, l'élément chauffant plat à rayonnement thermique (25) étant monté sur l'élément d'isolation phonique ou étant intégré dans l'élément d'isolation phonique.

7. Machine de travail mobile selon l'une quelconque des revendications 1 à 6, **caractérisée en ce que** l'élément chauffant plat à rayonnement thermique (25) est disposé dans la région d'une plaque de sol (28) de la cabine de conducteur (4).

8. Machine de travail mobile selon la revendication 7, **caractérisée en ce qu'**un tapis de sol est disposé sur la plaque de sol (28), l'élément chauffant plat à rayonnement thermique (25) étant monté sur le tapis de sol ou étant intégré dans le tapis de sol.

9. Machine de travail mobile selon l'une quelconque des revendications 1 à 8, **caractérisée en ce que** l'élément chauffant plat à rayonnement thermique (25) est disposé dans la région d'une paroi avant (31), en particulier d'un tableau de bord (32), et/ou d'une paroi arrière (33) de la cabine de conducteur (4).

10. Machine de travail mobile selon la revendication 9, **caractérisée en ce que** la paroi avant (31) et/ou la paroi arrière (33) sont pourvues d'un élément d'habillage, l'élément chauffant plat à rayonnement thermique (25) étant monté sur l'élément d'habillage ou étant intégré dans l'élément d'habillage.

11. Machine de travail mobile selon l'une quelconque des revendications 1 à 10, **caractérisée en ce que** la cabine de conducteur (4) est pourvue d'au moins une porte de cabine (18a ; 18b), l'élément chauffant plat à rayonnement thermique (25) étant disposé dans la région du côté intérieur de la porte.

12. Machine de travail mobile selon la revendication 11, **caractérisée en ce que** la porte de cabine (18a ; 18b) est pourvue d'un élément d'habillage interne, l'élément chauffant plat à rayonnement thermique (25) étant monté sur l'élément d'habillage interne ou étant intégré dans l'élément d'habillage interne.

13. Machine de travail mobile selon l'une quelconque des revendications 1 à 12, **caractérisée en ce que** l'élément chauffant plat à rayonnement thermique (25) est disposé dans la région d'un toit (15) de la cabine de conducteur (4).

14. Machine de travail mobile selon la revendication 13, **caractérisée en ce que** le toit (15) de la cabine de conducteur (4) est pourvu d'un élément d'habillage de toit, l'élément chauffant plat à rayonnement thermique (25) étant monté sur l'élément d'habillage de toit ou étant intégré dans l'élément d'habillage de toit.

15. Machine de travail mobile selon l'une quelconque des revendications 1 à 14, **caractérisée en ce que** la cabine de conducteur (4) est pourvue d'un siège de conducteur (6), l'élément chauffant plat à rayonnement thermique (25) étant disposé dans un coussin de siège (6a) et/ou dans un coussin de dossier (6b) du siège de conducteur (6).

16. Machine de travail mobile selon l'une quelconque des revendications 1 à 15, **caractérisée en ce que** la cabine de conducteur (4) est pourvue d'un accoudoir (9), en particulier d'un accoudoir (9) disposé sur le siège de conducteur (6), l'élément chauffant plat à rayonnement thermique (25) étant disposé dans la région de l'accoudoir (9).

17. Machine de travail mobile selon l'une quelconque des revendications 1 à 16, **caractérisée en ce que** l'élément chauffant plat à rayonnement thermique (25) est réalisé sous forme de plaque chauffante rigide ou flexible.

18. Machine de travail mobile selon l'une quelconque des revendications 1 à 17, **caractérisée en ce que** plusieurs éléments chauffants plats à rayonnement thermique (25) sont disposés à l'intérieur de la cabine de conducteur (4), les éléments chauffants plats à rayonnement thermique (25) pouvant être actionnés individuellement, en groupes ou ensemble.

19. Machine de travail mobile selon l'une quelconque des revendications 1 à 18, **caractérisée en ce que** la machine de travail est réalisée sous forme de véhicule antidéflagrant.
